(19) Europäisches Patentamt
European Patent Office
Office européen des brevets

(11) **EP 4 528 605 A1**

(12) **EUROPEAN PATENT APPLICATION**

(43) Date of publication:
**26.03.2025 Bulletin 2025/13**

(21) Application number: **24200741.7**

(22) Date of filing: **17.09.2024**

(51) International Patent Classification (IPC):
**G06N 20/00** (2019.01)

(52) Cooperative Patent Classification (CPC):
**G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.09.2023 JP 2023158719**

(71) Applicant: **FUJITSU LIMITED**
**Kawasaki-shi, Kanagawa 211-8588 (JP)**

(72) Inventor: **MURAKAMI, Katsuhiko**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **EVALUATION PROGRAM, EVALUATION METHOD, AND EVALUATION APPARATUS**

(57)    An evaluation program for causing a computer to execute a process includes training a plurality of first machine learning models that have different capabilities by using a plurality of pieces of correct answer labeled training data, generating a plurality of pieces of evaluation data of which similarity to the plurality of pieces of correct answer labeled training data is equal to or less than a predetermined value and of which a correct answer label is unknown, acquiring prediction results by each of the plurality of first machine learning models and one or more second machine learning models to be evaluated, for the plurality of pieces of evaluation data, and outputting, as an evaluation index that indicates a capability of each of the one or more second machine learning models, a parameter that indicates the capability when a probability model that includes a parameter which indicates a capability of each of the plurality of first machine learning models and the one or more second machine learning models and parameters which indicate correct answer labels of the plurality of pieces of evaluation data and that represents a probability that each of the plurality of first machine learning models and the one or more second machine learning models obtains the prediction result is optimized by inputting the prediction results to the probability model.

**EP 4 528 605 A1**

**Description**

FIELD

The embodiment discussed herein is related to a computer-readable recording medium storing an evaluation program, an evaluation method, and an evaluation apparatus.

BACKGROUND

A method for evaluating reliability of an estimated value for an input value by machine learning has been proposed. According to this method, training processing by a machine learning method is executed on a not-trained machine learning program P by using a plurality of input values and known output values obtained empirically from the plurality of input values as training data TD. In this method, a plurality of trained estimation models M1 to Mn for obtaining the output values from the input values are generated, a same input value a is input to each of the plurality of generated trained estimation models M1 to Mn, and output values X1 to Xn are obtained from the respective estimation models. In this method, an average value Xm and a standard deviation $\delta$Xm of the plurality of obtained output values are obtained, and an output value having a smaller standard deviation $\delta$Xm is evaluated as having higher reliability of the output value with respect to the input value.

Item response theory (IRT) has been introduced for evaluation of machine learning models related to natural language processing and the like. The IRT is widely used as a method for simultaneously evaluating capabilities of examinees and a quality of test problems in educational tests. Applying the IRT to the evaluation of the machine learning model makes it possible to evaluate both capabilities of the machine learning model and features of evaluation data.

Citation List

Patent Literature

Japanese Laid-open Patent Publication No. 2023-56139

Non-Patent Literature

Pedro Rodriguez, Phu Mon Htut, John Lalor, Joao Sedoc, "Clustering Examples in Multi-Dataset NLP Benchmarks with Item Response Theory", In Proceedings of the Third Workshop on Insights from Negative Results in NLP, pages 100-112, Dublin, Ireland, Association for Computational Linguistics, May 2022, and Joao Sedoc and Lyle Ungar, "Item Response Theory for Efficient Human Evaluation of Chatbots", In Proceedings of the First Workshop on Evaluation and Comparison of NLP Systems, pages 21-33, Online, Association for Computational Linguistics, November 2020 are also disclosed as related art.

SUMMARY OF INVENTION

TECHNICAL PROBLEMS

Although correct answer labeled data is desired for the evaluation of the machine learning model, it is difficult to obtain this correct answer labeled data in many cases. For example, in a field of biology or the like, an experiment is desired to obtain the correct answer labeled data, but this has a limit, and it is difficult to prepare a large number of pieces of correct answer labeled data. When a number of pieces of correct answer labeled data available is small for the evaluation of the machine learning model, the reliability of the evaluation may be low due to statistical insufficiency.

To appropriately evaluate the machine learning model, it is desirable to perform the evaluation with data different from a training data set used for training the machine learning model to be evaluated. However, in a case of a machine learning model developed outside and made public, there is a possibility that publicly available correct answer labeled data is used for training of the machine learning model. For comparative evaluation of capabilities of a plurality of machine learning models, such as comparison between a machine learning model developed outside and a machine learning model developed by oneself, it is desirable that the plurality of machine learning models be evaluated using a same benchmark data set. However, there is a case where a plurality of machine learning models are each trained with different training data sets and a case where a training data set is unknown because it is not made public. Under such circumstances, it is difficult to prepare an appropriate benchmark data set and perform fair comparative evaluation between a plurality of machine learning models.

As one aspect, an object of the disclosed technique is to perform comparative evaluation of a plurality of machine learning models while securing statistical reliability and fairness.

SOLUTION TO PROBLEM

In one aspect of the embodiments, an evaluation program for causing a computer to execute a process includes training a plurality of first machine learning models that have different capabilities by using a plurality of pieces of correct answer labeled training data, generating a plurality of pieces of evaluation data of which similarity to the plurality of pieces of correct answer labeled training data is equal to or less than a predetermined value and of which a correct answer label is unknown, acquiring prediction results by each of the plurality of first machine learning models and one or more second machine learning models to be evaluated, for the plurality of pieces of evaluation data, and outputting, as an evaluation index that indicates a capability of each of the one or more second machine learning models, a parameter that indicates the capability when a probability model that includes a parameter which indicates a capability of each of the plurality of first machine learning models and the one or more second machine learning models and parameters which indicate correct answer labels of the plurality of pieces of evaluation data and that represents a probability that each of the plurality of first machine learning models and the one or more second machine learning models obtains the prediction result is optimized by inputting the prediction results to the probability model.

EFFECTS OF INVENTION

As one aspect, there is an effect that it is possible to perform comparative evaluation of a plurality of machine learning models while securing statistical reliability and fairness.

BRIEF DESCRIPTION OF DRAWINGS

FIG. 1 is a functional block diagram of an evaluation apparatus;
FIG. 2 is a diagram for explaining a relationship among a machine learning model, a problem, a prediction result, and a latent variable indicating an estimated value of a correct answer label;
FIG. 3 is a block diagram illustrating a schematic configuration of a computer that functions as the evaluation apparatus;
FIG. 4 is a flowchart illustrating an example of evaluation processing; and
FIG. 5 is a diagram illustrating an example of training data.

DESCRIPTION OF EMBODIMENTS

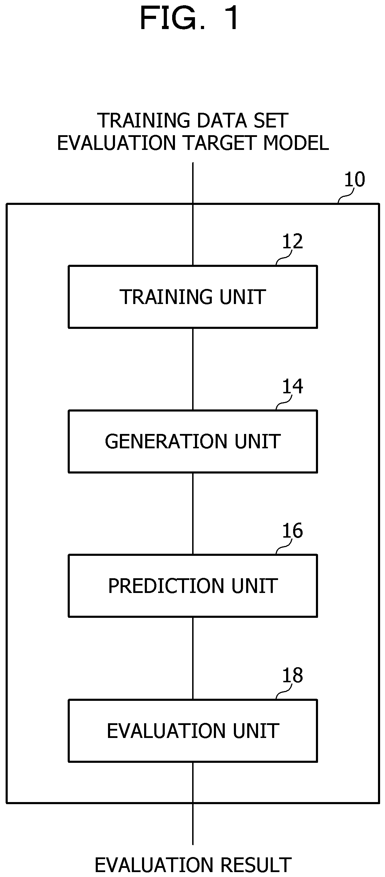

Hereinafter, an example of an embodiment according to the disclosed technique will be described below with reference to the drawings.
As illustrated in FIG. 1, a training data set including a plurality of pieces of training data with known correct answer labels (hereafter, also referred to as "correct answer labeled data") and one or more machine learning models to be evaluated (hereafter, referred to as "evaluation target models") are input to an evaluation apparatus 10. The correct answer labeled data is an example of "correct answer labeled training data" in the disclosed technique. In the present embodiment, it is assumed that a task targeted by a machine learning model is a classification problem. For example, an output of the machine learning model is, for example, 0 or 1 in a case of binary classification, and is a multi-value such as 1, 2, ..., or L (L is a number of types of correct answer labels) in a case of multi-value classification.
As illustrated in FIG. 1, the evaluation apparatus 10 functionally includes a training unit 12, a generation unit 14, a prediction unit 16, and an evaluation unit 18.
The training unit 12 trains a plurality of machine learning models having different capabilities by using a training data set. Hereinafter, the plurality of machine learning models trained by the training unit 12 are referred to as "self-created models". In a case where the evaluation target model and the self-created model are described without distinction, they are also simply referred to as "machine learning models".
For example, the training unit 12 may set, as the self-created model, a machine learning model acquired at each of a plurality of different stages in a process from start to convergence of training. During the process of training, the capability of the machine learning model increases as the training progresses. Accordingly, for example, in the process of training, the training unit 12 generates a plurality of self-created models having different capabilities by storing the machine learning model in a snapshot manner for each predetermined number of epochs.
A method for generating a plurality of self-created models having different capabilities is not limited to the above example. The training unit 12 may set, as the self-created model, a machine learning model trained by changing at least one of an initial value and a hyper parameter, for example, by changing a training route. The training unit 12 may set, as the self-created model, a machine learning model trained by using a part of correct answer labeled data selected from the training data set, for each machine learning model. A plurality of self-created models having different capabilities may be generated by performing training by combining these methods.

As will be described later, in the present embodiment, since an evaluation index obtained by relatively evaluating a plurality of machine learning models is obtained, it is a point that the generated self-created models have variation in capability. By applying the various methods as described above and diversifying the plurality of generated self-created models, it is possible to robustly estimate the capability of each machine learning model described later.

The generation unit 14 generates a plurality of problems of which similarity to correct answer labeled data is equal to or less than a predetermined value and of which a correct answer label is unknown. The problem generated by the generation unit 14 is an example of "evaluation data" in the disclosed technique. For example, the generation unit 14 generates problem candidates by random generation, changing at least a part of correct answer labeled data, deleting at least a part of correct answer labeled data, adding information to correct answer labeled data, or the like. The at least a part of correct answer labeled data is, for example, in a case where the problem is text data of a natural language, an amino acid sequence, or the like, a part of a character string, and in a case where the problem is constituted by attribute values of a plurality of attributes, an attribute value of a part of attributes.

The generation unit 14 generates a problem by selecting, from among the problem candidates, a problem candidate of which similarity to all of correct answer labeled data included in the training data set is equal to or less than a predetermined value. For example, in a case where the problem is text data of a natural language, an amino acid sequence, or the like, the generation unit 14 may use a ratio of the number of matching characters between the correct answer labeled data and the problem as the similarity. The generation unit 14 may represent the correct answer labeled data and the problem by respective vectors, and use a reciprocal of a distance between the vectors as the similarity. By generating such a problem of which similarity is equal to or less than the predetermined value, it is possible to generate a problem that may be regarded as being independent of the correct answer labeled data.

For each of the plurality of problems generated by the generation unit 14, the prediction unit 16 acquires a prediction result by each of the self-created model and the evaluation target model. This corresponds to an examinee answering a problem in the IRT. For example, the prediction unit 16 inputs each of the problems to each of the self-created model and the evaluation target model, and acquires an output of each of the self-created model and the evaluation target model as a prediction result.

The evaluation unit 18 optimizes a probability model including a parameter indicating a capability of a machine learning model and a parameter indicating a correct answer label of a problem, and representing a probability that each of the machine learning models obtains the prediction result acquired by the prediction unit 16. The evaluation unit 18 estimates the parameter indicating the capability when the probability model is optimized, as an evaluation index indicating a capability of an evaluation target model.

In the present embodiment, the item response theory (IRT) is applied to the probability model. The item response theory is also referred to as an item reaction theory. The IRT is a testing theory for measuring characteristics of a test subject such as recognition capability, physical capability, technique, knowledge, attitude, and personality features, and a difficulty level and identification power of each evaluation item based on a response to a group of evaluation items. A main feature of this theory is that parameters such as a personal capability value and a difficulty level of an item are stochastically obtained from a discrete result such as correctness or incorrectness for the evaluation item. For example, a probability $p_{i,j}$ that an examinee i correctly answers an item (small question) j is modeled by a sigmoid function represented by Equation (1) below.

$$p_{i,j} = c_j + \frac{(1 - c_j)}{1 + e^{-a_j(\theta_i - b_j)}} \qquad (1)$$

$\theta_i$ is a capability value parameter and is a real number value representing a magnitude of a capability of each examinee i to answer correctly as a whole. Unlike a correct answer rate, a total score, and the like, the capability value parameter $\theta_i$ is an interval scale estimated in consideration of individuality of each problem. $a_j$ is an identification parameter and is a real number value representing a decomposition capability of a problem j to identify the capability of the examinee. $b_j$ is a difficulty level (difficulty) parameter and is a real number value representing a difficulty level with which the examinee correctly answers the problem j. For example, it may be a capability value of an examinee having a correct answer rate of 50% for each problem, $c_j$ is an accidental correct answer rate parameter and is a probability that the examinee correctly answers accidentally even when the examinee selects an option at random in a case of a multiple choice format.

By regarding the examinee as the machine learning model in the common IRT as described above, it is possible to evaluate the capability of the machine learning model. However, in a probability model to which the common IRT is applied, a correct answer to a problem is desired for optimization of parameters. As described above, it is not easy to prepare a large number of pieces of correct answer labeled data. Accordingly, in the present embodiment, the individual parameters $\theta_i$, $a_j$, $b_j$, and $c_j$ described above are simultaneously estimated, and a parameter indicating a correct answer label of the problem and a parameter indicating whether a prediction result of each machine learning model is a correct answer are simultaneously estimated.

For example, it is hypothesized that a prediction (answer) by a machine learning model with low capability is close to a random answer. On the other hand, in a case where many machine learning models having high capability output a matching answer, it is hypothesized that there is a high possibility that the correct answer to the problem is the matching answer. A probability model formulated by incorporating this hypothesis into the IRT may be set.

For example, it is assumed that a total number of machine learning models is n and a total number of problems is m. It is assumed that for the problem (item) j, a prediction result of a machine learning model i is $x_{i,j}$ ($x_{i,j}$ = 1, 2, ..., and L), and a latent variable indicating an estimated value of a correct answer label is $z_j$ ($z_j$ = 1, 2, ..., and L). It is assumed that a function indicating whether the prediction result of the machine learning model i for the problem j is a correct answer or incorrect answer is denoted by $\Delta_{i,j}$ as represented by Equation (2) below. In this case, a probability P of obtaining n $\times$ m $x_{i,j}$ is represented by Equation (3) below.

$$\Delta_{i,j} = \Delta_{i,j}\left(x_{i,j}, z_j\right) = \begin{cases} 1 & for\ x_{i,j} = z_j \\ 0 & otherwise \end{cases} \qquad (2)$$

$$P = \prod_{i=1}^{n} \prod_{j=1}^{m} p_j(\theta_i)^{\Delta_{i,j}} \left(1 - p_j(\theta_i)\right)^{1-\Delta_{i,j}} \qquad (3)$$

$p_j(\theta_i)$ is a probability model using the IRT theory represented by Equation (1). The evaluation unit 18 estimates the parameters $z_j$, $a_j$, $b_j$, $c_j$, and $\theta_i$ that maximize the probability P represented by Equation (3). For example, the evaluation unit 18 maximizes the probability P by statistical modeling or the like such as a maximum likelihood method, Bayesian estimation, or a Markov chain Monte Carlo method, and estimates the parameters $z_j$, $a_j$, $b_j$, $c_j$, and $\theta_i$.

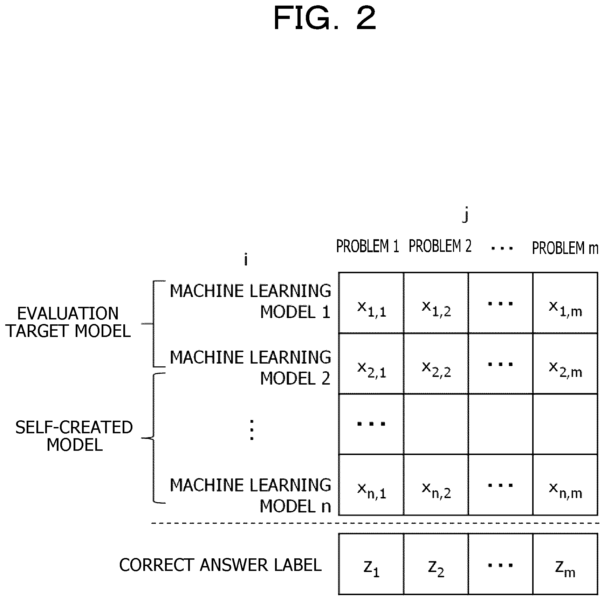

FIG. 2 illustrates a relationship among the machine learning model i, the problem j, the prediction result $x_{i,j}$, and the latent variable $z_j$ indicating an estimated value of a correct answer label. $x_{i,j}$ is a fixed value to be an input to the probability P. $z_j$ dynamically takes a value of "1, 2, ..., or L" in the process of parameter optimization, and a final value at the time of training convergence is the estimated value of the correct answer label.

Among the estimated parameters, the evaluation unit 18 outputs a capability parameter $\theta_i$ for the evaluation target model as an evaluation result. As described above, by applying the IRT theory to the probability model, the estimated value of the capability parameter $\theta_i$ is not an evaluation index having an upper limit and a lower limit in a state where data such as a correct answer rate is fixed, but is an index that relatively represents a difference in capability in a case where machine learning models are compared with each other.

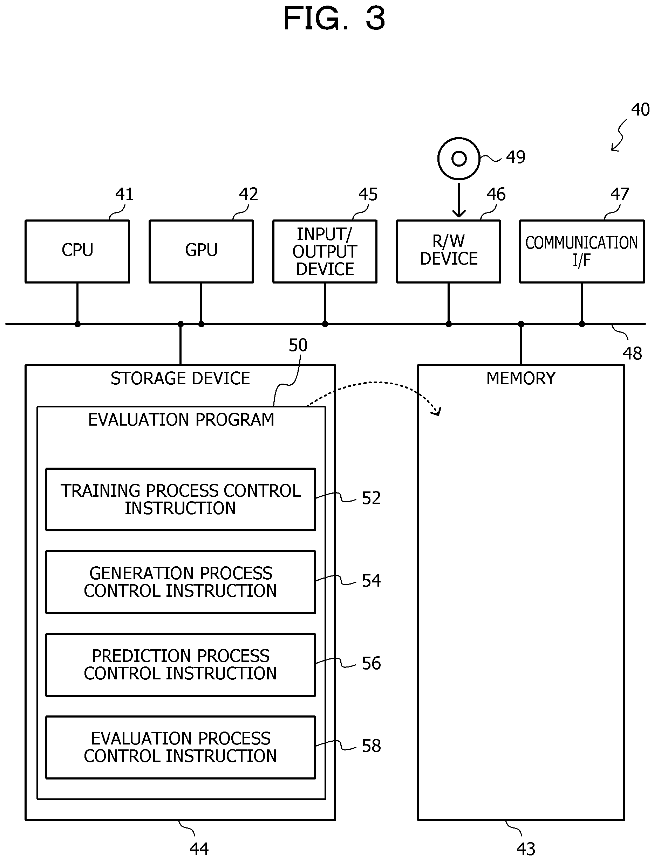

The evaluation apparatus 10 may be implemented by a computer 40 illustrated in FIG. 3, for example. The computer 40 includes a central processing unit (CPU) 41, a graphics processing unit (GPU) 42, a memory 43 serving as a temporary storage area, and a storage device 44 that is non-volatile. The computer 40 also includes an input/output device 45 such as an input device and a display device, and a read/write (R/W) device 46 that controls reading and writing of data from and to a storage medium 49. The computer 40 includes a communication interface (I/F) 47 that is coupled to a network such as the Internet. The CPU 41, the GPU 42, the memory 43, the storage device 44, the input/output device 45, the R/W device 46, and the communication I/F 47 are coupled to each other via a bus 48.

For example, the storage device 44 is a hard disk drive (HDD), a solid-state drive (SSD), a flash memory, or the like. An evaluation program 50 for causing the computer 40 to function as the evaluation apparatus 10 is stored in the storage device 44 serving as a storage medium. The evaluation program 50 includes a training process control instruction 52, a generation process control instruction 54, a prediction process control instruction 56, and an evaluation process control instruction 58.

The CPU 41 reads the evaluation program 50 from the storage device 44, loads the evaluation program 50 into the memory 43, and sequentially executes control instructions included in the evaluation program 50. The CPU 41 operates as the training unit 12 illustrated in FIG. 1 by executing the training process control instruction 52. The CPU 41 operates as the generation unit 14 illustrated in FIG. 1 by executing the generation process control instruction 54. The CPU 41 operates as the prediction unit 16 illustrated in FIG. 1 by executing the prediction process control instruction 56. The CPU 41 operates as the evaluation unit 18 illustrated in FIG. 1 by executing the evaluation process control instruction 58. Consequently, the computer 40 that executes the evaluation program 50 functions as the evaluation apparatus 10. The CPU 41 that executes the programs is hardware. Part of the program may be executed by the GPU 42.

The functions implemented by the evaluation program 50 may be implemented by, for example, a semiconductor integrated circuit, for example, an application-specific integrated circuit (ASIC), a field-programmable gate array (FPGA), or the like.

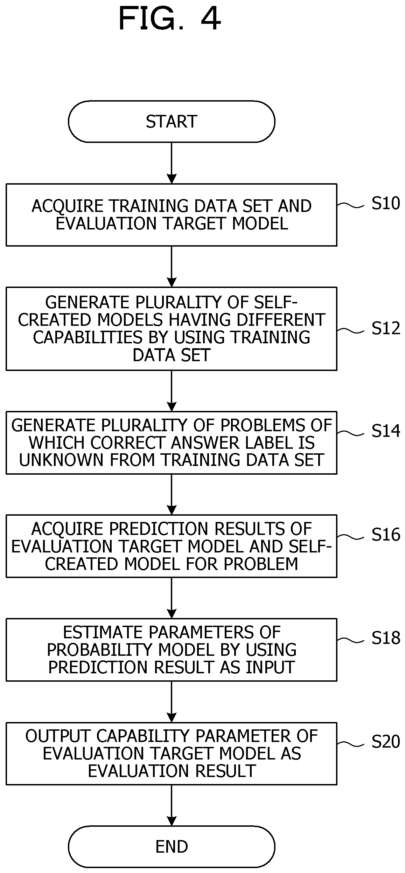

Next, an operation of the evaluation apparatus 10 according to the present embodiment will be described. When a training data set and an evaluation target model are input to the evaluation apparatus 10 and evaluation of the evaluation target model is instructed, evaluation processing illustrated in FIG. 4 is executed in the evaluation apparatus 10. The evaluation processing is an example of an evaluation method of the disclosed technique. An example of a machine learning model that executes an allergen prediction task for predicting whether a protein to be predicted is recognized by human immunity and causes an allergic reaction will be described. This is an area where prediction is in high demand, as it is often unclear which proteins may or may not be allergens.

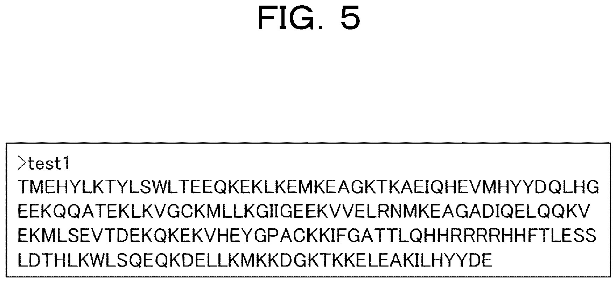

In step S10, the training unit 12 acquires the training data set and the evaluation target model input to the evaluation apparatus 10. Each piece of correct answer labeled data included in the training data set is obtained by assigning a correct answer label to text data of an amino acid sequence as illustrated in FIG. 5. The correct answer label is a label (for example, expressed by a value of 0 or 1) indicating whether the protein corresponding to the amino acid sequence is an allergenic protein or a non-allergenic protein. Examples of the evaluation target model include existing allergen prediction models such as AllerCatPro (https://allercatpro.bii.a-star.edu.sg/), AllerTOPv2 (https://www.ddg-pharmfac.net/AllerTOP/), and the like.

Next, in step S12, the training unit 12 generates a plurality of (for example, 5 to 100) self-created models having different capabilities by using an initial machine learning model prepared by a user in advance and the acquired training data set.

Next, in step S14, the generation unit 14 generates a plurality of problems of which a correct answer label is unknown from the training data set. For example, the generation unit 14 generates, as problem candidates, amino acid sequences translated from a genome sequence, a transcript ribonucleic acid (RNA) sequence, or the like of a biological species (for example, barley) that may be an allergen. The generation unit 14 generates amino acid sequences acquired from a protein database as the problem candidates. The generation unit 14 may generate the problem candidates by replacing a part of character strings in these sequences with another amino acid or the like. The generation unit 14 generates a problem by selecting, from among the problem candidates, a problem candidate of which similarity to all of correct answer labeled data included in the training data set is equal to or less than a predetermined value.

Any one of the processing in step S12 and the processing in step S14 may be executed first or may be executed in parallel.

Next, in step S16, the prediction unit 16 acquires a prediction result (a value of 0 or 1) by each of the self-created model and the evaluation target model for each of the plurality of generated problems. Next, in step S18, the evaluation unit 18 inputs the prediction result to a probability model (for example, the probability P represented by Equation (3)) that indicates a probability with which the prediction result by the prediction unit 16 is obtained and includes a capability parameter of each machine learning model and a parameter indicating an estimated value of a correct answer label. The evaluation unit 18 estimates parameters of the probability model to maximize the probability. Next, in step S20, the evaluation unit 18 outputs, as an evaluation result, the capability parameter of the evaluation target model among the estimated parameters, and the evaluation processing ends.

As described above, the evaluation apparatus according to the present embodiment trains a plurality of self-created models that have different capabilities by using a training data set including a plurality of pieces of correct answer labeled data. The evaluation apparatus generates a plurality of problems of which similarity to the pieces of correct answer labeled data is equal to or less than a predetermined value and of which a correct answer label is unknown. The evaluation apparatus acquires a prediction result for each of the plurality of problems by each of the self-created model and the evaluation target model. The evaluation apparatus inputs the prediction result to a probability model that includes a parameter which indicates a capability of each machine learning model and a parameter which indicates a correct answer label of the problem and that represents a probability that the prediction result is obtained by each machine learning model. The evaluation apparatus outputs a capability parameter when the probability model is optimized, as an evaluation index indicating a capability of the evaluation target model.

As described above, by generating a new problem that may be regarded as being independent of the correct answer labeled data used for training of the self-created model, it is possible to use, for evaluation of a machine learning model for which training data is unknown, data that is not used for training of the machine learning model. Accordingly, fairness of the evaluation may be secured. By estimating a correct answer label of the problem together with the capability of the machine learning model, a correct answer of the problem to be generated may be unknown, and thus a large number of problems may be generated. Accordingly, statistical reliability of the evaluation may be secured.

In embedded knowledge learning of a knowledge graph, a random pattern may be generated, regarded as a negative example, and used for training. In this case, even when an attempt is made to generate a positive example with the generated data, it is almost impossible. Because there is a markedly high possibility that data randomly generated from a relationship with words, for example, a negative example such as <capital> of <America> is <Beijing> is generated, and there is no procedure for estimating or confirming whether it is positive or negative, the randomly generated data is only regarded as a negative example. By contrast, in the present embodiment, since there is a procedure for estimating or confirming whether it is positive or negative, both the positive example and the negative example may be generated.

It is also considered that using a prediction result of a machine learning model as a correct answer label of data used for evaluation of the machine learning model causes a decrease in reliability of the evaluation. By simultaneously using a plurality of machine learning models having different capabilities in the present embodiment, it is possible to reduce an error rate of the correct answer label estimation as compared with a case where one machine learning model is used.

In semi-supervised learning, a prediction result of a machine learning model is attached as a correct answer label to unlabeled data, and the unlabeled data is used for training of the machine learning model. However, the semi-supervised learning generates training data from unlabeled data prepared in advance, and thus a number of pieces of generated data is limited. In the present embodiment, the number of pieces of generated data is not limited, and the pieces of data may be increased almost infinitely. The present embodiment is different from the semi-supervised learning in that a correct answer to a problem generated in the present embodiment is estimated simultaneously with evaluation of a machine learning model.

For example, in the field of biology, a large amount of data on existing DNA sequences and amino acid sequences is registered in a database. On the other hand, in many cases, it is costly to obtain information of interest (correct answer) by an experiment for these pieces of data, or a correct answer is not given in a case of a rare phenomenon. As described above, in a field in which a large number of pieces of input data (problems) may be generated from existing data, an effect of applying the technique of the present disclosure is particularly high.

Although an evaluation program is stored (installed) in a storage device in advance in the above-described embodiment, the embodiment is not limited thereto. The program according to the disclosed technique may be provided in a form of being stored in a storage medium such as a compact disc read-only memory (CD-ROM), a Digital Versatile Disc ROM (DVD-ROM), a Universal Serial Bus (USB) memory, or the like.

Regarding the above-described embodiment, the following appendices are further disclosed.

## Claims

1.   An evaluation program for causing a computer to execute a process comprising:

   training a plurality of first machine learning models that have different capabilities by using a plurality of pieces of correct answer labeled training data;
   generating a plurality of pieces of evaluation data of which similarity to the plurality of pieces of correct answer labeled training data is equal to or less than a predetermined value and of which a correct answer label is unknown;
   acquiring prediction results by each of the plurality of first machine learning models and one or more second machine learning models to be evaluated, for the plurality of pieces of evaluation data; and
   outputting, as an evaluation index that indicates a capability of each of the one or more second machine learning models, a parameter that indicates the capability when a probability model that includes a parameter which indicates a capability of each of the plurality of first machine learning models and the one or more second machine learning models and parameters which indicate correct answer labels of the plurality of pieces of evaluation data and that represents a probability that each of the plurality of first machine learning models and the one or more second machine learning models obtains the prediction result is optimized by inputting the prediction results to the probability model.

2.   The evaluation apparatus according to claim 1, wherein
   the probability model is a model for simultaneously estimating the parameter which indicates the capability and a parameter which indicates a feature of each of the plurality of pieces of evaluation data, and simultaneously estimating the parameters which indicate the correct answer labels and a parameter which indicates whether the prediction result is a correct answer, based on an item response theory.

3.   The evaluation program according to claim 2, wherein
   the parameter which indicates the feature includes a parameter which indicates a decomposition capability of the evaluation data to identify a capability of each of the plurality of first machine learning models and the one or more second machine learning models, a parameter which indicates a difficulty level of predicting a correct answer to the evaluation data, and a parameter which indicates a probability that the correct answer to the evaluation data is accidentally predicted.

4. The evaluation program according to any one of claims 1 to 3, wherein

the first machine learning model is at least one of
a machine learning model acquired at each of a plurality of different stages in a process from start to convergence of training,
a machine learning model trained by changing at least one of an initial value and a hyper parameter, and
a machine learning model trained by using a part of training data selected from the plurality of pieces of correct answer labeled training data, for each machine learning model.

5. The evaluation program according to any one of claims 1 to 4, wherein
the generation unit selects, from data generated by at least one method of random generation, changing at least a part of the correct answer labeled training data, deleting at least a part of the correct answer labeled training data, and adding information to the correct answer labeled training data, data of which the similarity to all of the plurality of pieces of correct answer labeled training data is equal to or less than a predetermined value.

6. An evaluation method implemented by a computer, the evaluation method comprising:

training a plurality of first machine learning models that have different capabilities by using a plurality of pieces of correct answer labeled training data;
generating a plurality of pieces of evaluation data of which similarity to the plurality of pieces of correct answer labeled training data is equal to or less than a predetermined value and of which a correct answer label is unknown;
acquiring prediction results by each of the plurality of first machine learning models and one or more second machine learning models to be evaluated, for the plurality of pieces of evaluation data; and
outputting, as an evaluation index that indicates a capability of each of the one or more second machine learning models, a parameter that indicates the capability when a probability model that includes a parameter which indicates a capability of each of the plurality of first machine learning models and the one or more second machine learning models and parameters which indicate correct answer labels of the plurality of pieces of evaluation data and that represents a probability that each of the plurality of first machine learning models and the one or more second machine learning models obtains the prediction result is optimized by inputting the prediction results to the probability model.

7. The evaluation method according to claim 6, wherein
the probability model is a model for simultaneously estimating the parameter which indicates the capability and a parameter which indicates a feature of each of the plurality of pieces of evaluation data, and simultaneously estimating the parameters which indicate the correct answer labels and a parameter which indicates whether the prediction result is a correct answer, based on an item response theory.

8. The evaluation method according to claim 7, wherein
the parameter which indicates the feature includes a parameter which indicates a decomposition capability of the evaluation data to identify a capability of each of the plurality of first machine learning models and the one or more second machine learning models, a parameter which indicates a difficulty level of predicting a correct answer to the evaluation data, and a parameter which indicates a probability that the correct answer to the evaluation data is accidentally predicted.

9. The evaluation method according to any one of claims 6 to 8, wherein

the first machine learning model is at least one of
a machine learning model acquired at each of a plurality of different stages in a process from start to convergence of training,
a machine learning model trained by changing at least one of an initial value and a hyper parameter, and
a machine learning model trained by using a part of training data selected from the plurality of pieces of correct answer labeled training data, for each machine learning model.

10. The evaluation method according to any one of claims 6 to 9, wherein
the generation unit selects, from data generated by at least one method of random generation, changing at least a part of the correct answer labeled training data, deleting at least a part of the correct answer labeled training data, and adding information to the correct answer labeled training data, data of which the similarity to all of the plurality of pieces of correct answer labeled training data is equal to or less than a predetermined value.

11. An evaluation apparatus comprising:

a training unit configured to train a plurality of first machine learning models that have different capabilities by using a plurality of pieces of correct answer labeled training data;
a generation unit configured to generate a plurality of pieces of evaluation data of which similarity to the plurality of pieces of correct answer labeled training data is equal to or less than a predetermined value and of which a correct answer label is unknown;
a prediction unit configured to acquire prediction results by each of the plurality of first machine learning models and one or more second machine learning models to be evaluated, for the plurality of pieces of evaluation data; and
an evaluation unit configured to output, as an evaluation index that indicates a capability of each of the one or more second machine learning models, a parameter that indicates the capability when a probability model that includes a parameter which indicates a capability of each of the plurality of first machine learning models and the one or more second machine learning models and parameters which indicate correct answer labels of the plurality of pieces of evaluation data and that represents a probability that each of the plurality of first machine learning models and the one or more second machine learning models obtains the prediction result is optimized by inputting the prediction results to the probability model.

12. The evaluation apparatus according to claim 11, wherein
the probability model is a model for simultaneously estimating the parameter which indicates the capability and a parameter which indicates a feature of each of the plurality of pieces of evaluation data, and simultaneously estimating the parameters which indicate the correct answer labels and a parameter which indicates whether the prediction result is a correct answer, based on an item response theory.

13. The evaluation apparatus according to claim 12, wherein
the parameter which indicates the feature includes a parameter which indicates a decomposition capability of the evaluation data to identify a capability of each of the plurality of first machine learning models and the one or more second machine learning models, a parameter which indicates a difficulty level of predicting a correct answer to the evaluation data, and a parameter which indicates a probability that the correct answer to the evaluation data is accidentally predicted.

14. The evaluation apparatus according to any one of claims 11 to 13, wherein
the first machine learning model is at least one of

a machine learning model acquired at each of a plurality of different stages in a process from start to convergence of training,
a machine learning model trained by changing at least one of an initial value and a hyper parameter, and
a machine learning model trained by using a part of training data selected from the plurality of pieces of correct answer labeled training data, for each machine learning model.

15. The evaluation apparatus according to any one of claims 11 to 14, wherein
the generation unit selects, from data generated by at least one method of random generation, changing at least a part of the correct answer labeled training data, deleting at least a part of the correct answer labeled training data, and adding information to the correct answer labeled training data, data of which the similarity to all of the plurality of pieces of correct answer labeled training data is equal to or less than a predetermined value.

# FIG. 1

TRAINING DATA SET
EVALUATION TARGET MODEL

10

12

TRAINING UNIT

14

GENERATION UNIT

16

PREDICTION UNIT

18

EVALUATION UNIT

EVALUATION RESULT

# FIG. 2

|  | | PROBLEM 1 | PROBLEM 2 | $\cdots$ | PROBLEM m |
|---|---|---|---|---|---|
| EVALUATION TARGET MODEL | MACHINE LEARNING MODEL 1 | $x_{1,1}$ | $x_{1,2}$ | $\cdots$ | $x_{1,m}$ |
| | MACHINE LEARNING MODEL 2 | $x_{2,1}$ | $x_{2,2}$ | $\cdots$ | $x_{2,m}$ |
| SELF-CREATED MODEL | $\vdots$ | $\cdots$ | | | |
| | MACHINE LEARNING MODEL n | $x_{n,1}$ | $x_{n,2}$ | $\cdots$ | $x_{n,m}$ |
| CORRECT ANSWER LABEL | | $z_1$ | $z_2$ | $\cdots$ | $z_m$ |

# FIG. 3

40

49

| 41 | 42 | 45 | 46 | 47 |
|---|---|---|---|---|
| CPU | GPU | INPUT/ OUTPUT DEVICE | R/W DEVICE | COMMUNICATION I/F |

48

STORAGE DEVICE 50

MEMORY

EVALUATION PROGRAM

TRAINING PROCESS CONTROL INSTRUCTION — 52

GENERATION PROCESS CONTROL INSTRUCTION — 54

PREDICTION PROCESS CONTROL INSTRUCTION — 56

EVALUATION PROCESS CONTROL INSTRUCTION — 58

44

43

# FIG. 4

```
          START
            │
            ▼
┌──────────────────────────────┐
│  ACQUIRE TRAINING DATA SET AND │ ─── S10
│   EVALUATION TARGET MODEL      │
└──────────────────────────────┘
            │
            ▼
┌──────────────────────────────┐
│  GENERATE PLURALITY OF SELF-   │
│  CREATED MODELS HAVING DIFFERENT│ ─── S12
│  CAPABILITIES BY USING TRAINING │
│        DATA SET                │
└──────────────────────────────┘
            │
            ▼
┌──────────────────────────────┐
│  GENERATE PLURALITY OF PROBLEMS OF │ ─── S14
│  WHICH CORRECT ANSWER LABEL IS │
│  UNKNOWN FROM TRAINING DATA SET │
└──────────────────────────────┘
            │
            ▼
┌──────────────────────────────┐
│  ACQUIRE PREDICTION RESULTS OF │ ─── S16
│  EVALUATION TARGET MODEL AND SELF- │
│  CREATED MODEL FOR PROBLEM     │
└──────────────────────────────┘
            │
            ▼
┌──────────────────────────────┐
│  ESTIMATE PARAMETERS OF        │ ─── S18
│  PROBABILITY MODEL BY USING    │
│  PREDICTION RESULT AS INPUT    │
└──────────────────────────────┘
            │
            ▼
┌──────────────────────────────┐
│  OUTPUT CAPABILITY PARAMETER OF │ ─── S20
│  EVALUATION TARGET MODEL AS    │
│  EVALUATION RESULT             │
└──────────────────────────────┘
            │
            ▼
          END
```

# FIG. 5

>test1
TMEHYLKTYLSWLTEEQKEKLKEMKEAGKTKAEIQHEVMHYYDQLHG
EEKQQATEKLKVGCKMLLKGIIGEEKVVELRNMKEAGADIQELQQKV
EKMLSEVTDEKQKEKVHEYGPACKKIFGATTLQHHRRRRHHFTLESS
LDTHLKWLSQEQKDELLKMKKDGKTKKELEAKILHYYDE

| | Europäisches Patentamt European Patent Office Office européen des brevets | **EUROPEAN SEARCH REPORT** | Application Number EP 24 20 0741 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARTÍNEZ-PLUMED FERNANDO ET AL: "Item response theory in AI: Analysing machine learning classifiers at the instance level", ARTIFICIAL INTELLIGENCE, vol. 271, 1 June 2019 (2019-06-01), pages 18-42, XP085656800, ISSN: 0004-3702, DOI: 10.1016/J.ARTINT.2018.09.004 * the whole document * | 1-15 | INV. G06N20/00 |
| A | SONG HAO ET AL: "Efficient and Robust Model Benchmarks with Item Response Theory and Adaptive Testing", INTERNATIONAL JOURNAL OF INTERACTIVE MULTIMEDIA AND ARTIFICIAL INTELLIGENCE, [Online] vol. 6, no. 5, 23 February 2021 (2021-02-23), page 110, XP093245092, ISSN: 1989-1660, DOI: 10.9781/ijimai.2021.02.009 [retrieved on 2025-01-31] * Sections I, III * | 1-15 | |
| A | CHEN ZIHENG ET AL: "Item Response Theory Based Ensemble in Machine Learning", INTERNATIONAL JOURNAL OF AUTOMATION AND COMPUTING, ZHONGGUO KEXUE ZAZHISHE, CN, vol. 17, no. 5, 9 September 2020 (2020-09-09), pages 621-636, XP037467352, ISSN: 1476-8186, DOI: 10.1007/S11633-020-1239-Y [retrieved on 2020-09-09] * Sections 1, 3-5 * | 1-15 | |

TECHNICAL FIELDS SEARCHED (IPC)

G06N

-/--

The present search report has been drawn up for all claims

| Place of search | Date of completion of the search | Examiner |
|---|---|---|
| The Hague | 31 January 2025 | Efthymiadis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

# EUROPEAN SEARCH REPORT

Application Number

EP 24 20 0741

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Hartmann Nathan Siegle: "Comparing supervised machine learning algorithms using item response theory models Mariana Curi* (presenting author) Universidade de São Paulo, São Carlos, Brazil -mcuri at icmc dot usp dot br Arnaldo Candido Junior Universidade Tecnológica Federal do Paraná, Medianeira, Brazil -arnaldoc at utfpr do", <br><br> , <br> 16 July 2017 (2017-07-16), XP093245070, Retrieved from the Internet: URL:https://isi-web.org/sites/default/files/import/proceedings/PO-C02-comparing-supervised-machine-learning-algorithms-using-item-response-theory-models.pdf [retrieved on 2025-01-31] * Section 2 * | 1-15 | |
| A | MORAES JOAO V C ET AL: "Item Response Theory for Evaluating Regression Algorithms", 2020 INTERNATIONAL JOINT CONFERENCE ON NEURAL NETWORKS (IJCNN), IEEE, 19 July 2020 (2020-07-19), pages 1-8, XP033831358, DOI: 10.1109/IJCNN48605.2020.9207030 [retrieved on 2020-09-25] * Sections II, III * | 1-15 | TECHNICAL FIELDS SEARCHED (IPC) |

-/--

The present search report has been drawn up for all claims

| Place of search | Date of completion of the search | Examiner |
|---|---|---|
| The Hague | 31 January 2025 | Efthymiadis, K |

Europäisches
Patentamt

European
Patent Office

Office européen
des brevets

# EUROPEAN SEARCH REPORT

Application Number

EP 24 20 0741

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Telmo Yu Chen ET AL: "[beta] 3 -IRT: A New Item Response Model and its Applications", , 11 April 2019 (2019-04-11), XP093245089, Retrieved from the Internet: URL:http://proceedings.mlr.press/v89/chen19b/chen19b.pdf [retrieved on 2025-01-31] * Sections 1, 3, 5 * | 1-15 | |

- - - - -

TECHNICAL FIELDS
SEARCHED       (IPC)

The present search report has been drawn up for all claims

| Place of search | Date of completion of the search | Examiner |
|---|---|---|
| The Hague | 31 January 2025 | Efthymiadis, K |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 & : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023056139 A

**Non-patent literature cited in the description**

- Clustering Examples in Multi-Dataset NLP Benchmarks with Item Response Theory. **PEDRO RODRIGUEZ** ; **PHU MON HTUT** ; **JOHN LALOR** ; **JOAO SEDOC**. Proceedings of the Third Workshop on Insights from Negative Results in NLP. Association for Computational Linguistics, May 2022, 100-112

- Item Response Theory for Efficient Human Evaluation of Chatbots. **JOAO SEDOC** ; **LYLE UNGAR**. Proceedings of the First Workshop on Evaluation and Comparison of NLP Systems. Association for Computational Linguistics, November 2020, 21-33